# EUROPEAN PATENT SPECIFICATION

(11) **EP 2 889 160 B1**
(45) Date of publication and mention of the grant of the patent: **19.06.2019**
(21) Application number: 14191288.1
(22) Date of filing: 31.10.2014
(51) Int. Cl.: B60C 11/12

(54) **Tyre tread and lamella for fixing into a vulcanisation mould for forming of a lamella's cut in a tyre tread block**
Reifenlauffläche und Lamelle zur Befestigung in einer Vulkanisierungsform zur Formung eines Lamelleneinschnittes in einem Reifenlaufflächenblock
Bande de roulement de pneumatique et lamelle à fixer dans une moule de vulcanisation pour la formation d'une découpe lamellaire dans un bloc de sculptures de ladite bande

(30) Priority: 10.12.2013 SK 500522013
(43) Date of publication of application: 01.07.2015
(73) Proprietor: CONTINENTAL MATADOR RUBBER, S.R.O., 020 01 Púchov (SK)
(72) Inventor: Hajdúch, Jaroslav, 014 01 Bytca (SK); Rypák, Martin, 020 01 Púchov (SK)
(74) Representative: Finger, Karsten

(56) References cited:
- EP-A1- 2 450 200
- WO-A1-2008/068216
- WO-A1-2010/144091

## Description

### Field of the Invention

The invention relates to the construction of the vulcanisation mould for the production of winter, summer, and all-seasons tyres for personal and lorry vehicles, where the lamella forms narrow cuts of desired shape and number in the pattern blocks in the pattern part of the tread during the pressing. Such formed cuttings provide more effective force transfer in the contact area between the pattern and the road surface.

### Background of the Invention

The treads are intended for the using in cars during winter and all seasons, and are characterized, apart of the circumference and transverse pattern grooves, also by high number of narrow cuttings formed by the lamellas placed in the pattern part of the cavity of the vulcanisation mould. The lamellas are produced by the shaping operations from metal, the materials having the characteristics depending on the purpose (corrosion resistance, strength...). In the mould, they are fixed as non-dismountable (milled moulds, e.g. by sticking), secured against their withdrawing during the mould opening. They are placed radially to the axis of the tread rotation. The lamellas can have the depth of the pattern grooves defined by the tread profile, or the depth can be variable, dependent on the requirements imposed to the pattern. In the perspective from the radial direction the lamella's shape can consists of the known curves (arc, line, parabola...) and form some figure (e.g. sin function, zig-zag...). Size and shape are determined by the design, desired characteristics, and the size of the pattern blocks. The lamellas used in one pattern can be identical or can have different shapes.

Due to their number the lamellas provide many engagement edges for increasing of the effectiveness of the force transfer in the contact area between the pattern and the road surface. This fact can be employed on wet, snowy, and icy road surfaces.

The significant deformation of the pattern block occurs during the force transfer in the interaction between the tread and the road surface. The deformation strongly influences the on-road performance, impacts the drive stability, and influences the speed of the tread reaction. After the decomposition of the forces to the area of the road surface the deformation intensity depends on the character of the force imposed in the given moment, and it is obvious that the deformation gains the values of all circle quadrants. The ideal solution in relation to the deformations in the area of the road surface is the using of the blocks uninterrupted by any cuttings, or grooves. Since this solution is not acceptable from both legal and technical reasons, the continual tread has to be interrupted by the grooves. In order to increase the engagement characteristics the block has to be divided by the narrow cuttings, which cuttings negatively influence the block rigidity. It is the reason why various shapes of the cuttings are used currently: the straight ones having variable bottom depth, ones with the various shapes, however mostly with sinusoidal function like shape. Shaping of the cutting increases the bock rigidity, particularly in the axial direction, partly in tangential direction in relation to the tread circumference. Said phenomena causes the different deformations in longitudinal and traverse directions in relation to the cutting.

Recent knowledge proves that various producers start to use the cuttings having various shapes in order to increase the rigidity in all direction, and in order to provide even distribution of the tension in the pattern block. It provides the minimal deformation during the force transfer, the increase of the rate of the reaction to the driver impulses, the increase of the operation safety. The knowledge of the currently known models of the lockable cuttings is as follows:
3-D cuttings of Continental, described in European patent EP 1 223 054 A1 of January 12, 2001, have a shape of the wave consisting of the alternatively distributed radius of different diameters placed opposite to each other. The lamella is in its lower part changing to the opposite shapes with the arcs of small diameter substituted by the arcs with the bigger diameter and *vice versa.* The shape modifications of such arrangement can be of triangle or orthogonal quadrangle, or their combinations. The locking characteristics will differ depending on the using of the individual shapes. The locking will occur with delay.

The solution of Semperit Company disclosed in patent US 5,350,001 of September 27, 1994, shows the cutting having sin-function shape passing to the shape shifted by ¼ of the wave length. The repeating in the radial direction depends on the shape. Its value can be 2 and more. If the value is 2, the cutting area at its crossing point with the tread surface is oriented radially. If the value is higher, the cutting area has an angle deviation from the radial direction. In the solution having composed triangle shape the grooves have variously oriented edges.

EP 0,131,246 patent of Continental company describes zig-zag groove continually passing from the upper curve to the straight one; positioned in the lower part and shifted by ¼ of the length.

WO 99/48707 of Goodyear describes the cutting formed by the flat area with the intermittent semi-spherical depressions on one side and the semi-spherical projections on the other sides, which depressions and projections mutually collaborates due their alternative orientations in relation to the cutting axis. The solution made the pattern block more rigid in all directions in the lamella area. In relation to the shape of projections the locking was performed with a delay.

Said document serves as the basis of Goodyear's solution according to patent EP 1,533,141 A1, where projections and depressions are regularly positioned from the cutting area, which projections and depressions are continually tied up to each other. Their shape can have triangle, quadrangle,....x-angle cross section. This Goodyear's solution partially avoids the delay and the onset of the locking is sharper.

WO 2008/068216 A1 describes a tread compising of a plurality of relief elements provided with at least a first and at least a second incision. Each first incision comprises at least two non planar portions separated by a middle portion. The non planar portions have a dual undulation, while the planar portions have a simple undulation. Each second incision comprises at least two non planar portions separated by a middle portion. The non planar portions have at least one undulation in the depth of the tread with a maximal amplitude C, while each middle portion of the at least second incision is free from any deformed relief. The first incisions cut through at least a second incision to create at least one intersection to divide the relief element, on which they are preformed, into several volume elements, each intersection being formed between a middle portion of the at least one incision and a middle portion of the at least second incision.

WO 2010/144091 A1 describes a progressive sipe mold member with which an undulation on its upper member and a corresponding sipe formed within a tire tread. In a particular embodiment, the present invention includes a progressive sipe mold member for use in a mold, the mold member comprising: an upper mold member extending downwardly from a top end to a bottom end with an undulation therebetween; and, a first lower projection member and a second lower projection member, each lower member extending downward from the upper meld member. The sipe mold member may also have a sweep axis along which the sipe mold member undulates in a desired path. Also the lower projections may have scallops or recesses along their outward and inward facing surfaces. The mold member creates a sipe in the tread of a tire that has the negative image of the shape of the mold member.

EP 2 450 200 A1 describes a pneumatic tire including a closed sipe in a land portion formed in a tread surface, provided with at least three cuts extending in a radiation direction from an imaginary axis that extends in a depth direction of the land portion, and that terminate in the land portion. The cuts are provided with a spiral-like twist in the depth direction, centered on the imaginary axis, and a twist angle thereof is not less than 10° and less than 135°. Additionally, a length in the radiation direction of the cuts or a width of the cuts is formed larger at a tread surface side than at a bottom surface side.

### Definitions

Axial direction - the direction defined by the tread rotation axis in the auto-mobile;
Radial direction - the direction defined by the normal axis to the tread circumference and the axis of the rotation, which rotation axis it crosses in the same time.
Tangential direction - the direction defined by the tangent of the circumference circle;
Lamella - the moulding part made from the metal sheet, from the material of the desired characteristics, of defined thickness, in fix, non-dismountable connection with the mould cavity in the pattern part, providing the thing cutting in the pattern blocks with shape and dimensions.

### Subject Matter of the Invention

To make the description of the lamella's body clearer it will be described only as a surface formed by neutral axis during the bending of the lamella. The radius inevitable for the manufacturing technology of thin-wall products will not be considered. Thus the lamella's body is created by the evenly applied material layer in relation to the neutral surface in the direction of each surface side (the reduction of the wall thickness due to the moulding process is not considered).

The subject matter of this invention is the tyre treat containing at least one row of the pattern blocks arranged in the circumferencial direction of the treat, wherein at least one of these blocks is provided with one or more three dimensionally shaped lamellar cuttings in the radial direction of the tyre, and this shaped lamellar cutting is defined by mutually fitting shaped surfaces formed by lamella during the vulcanisation. The subject matter of this invention resides in the fact that the lamellar cutting is formed by the lamella consisting of at least three radially arranged blades connected in one axis in the radial direction of the tyre, while the surface of each blade contains two flat surface areas with a helical surface area Z between them, wherein the flat surface areas form an angel α around the connection axis, and the total radial depth of the lamellar cutting is H.

The value of α angel can be from 20° to 45°, preferably from 20 to 40°.

Both flat surface areas of each blade form at least ¼ of the total radial depth H and the helical part of the cutting is formed by the individual lamella blade forming from 1/4 to 1/2 of depth "H".

The lamellar cutting can be formed also by a doubled lamella, i.e. the lamella formed by two simple lamellas arranged in such a way that one blade is connected to or touches the blade of the second lamella.

According to the preferred embodiment the helical part of at least one cutting of the lamella's blade is equipped with a geometric space element formed by at least three walls and oriented perpendicular to the radial connection axis, in order to increase rigidity of the pattern block.

At least one wall of the geometric space element of the lamella forms an angel β with a plane oriented perpendicular to the radial connection axis, being in the range from 40° to 60°, wherein the surface areas of the walls of this geometric space element can be flat, convex or concave.

The subject matter of this invention is also the lamella suitable to be fixed in the inner part of a vulcanisation mould in order to form the lamellar cutting in the pattern block of the tyre tread. The subject matter of the lamella according to this invention resides in the fact that it is formed as a helix having R1 radius and R2 radius at its radially outer end and radially inner end, respectively, in directions perpendicular to the connection axis. The lamella consists of at least three radially arranged, regularly positioned blades connected in the radial connection axis; and each blade consists of two flat surface areas forming angel α around the connection axis which are connected by a helical surface area Z between them which is tangentially attached to the flat surface areas; wherein the lamella, in a view in the radial direction of the tyre, is twisted depending on the radial depth H of the lamella. The rotation axis crosses its centre, while R1 and R2 are identical or different. Preferably, R1 is higher than R2.

According to the preferred embodiment at least one helical area of the lamella's blade is supplemented with the geometric space element having the symmetric area arranged perpendicularly to the helical area of the lamella.

The blades of the lamella can be arranged also in bigger complexes. For example the lamella can consist of two simple lamellas arranged opposite to each other and connected by the ends of one blade of either lamella.

At least one wall of geometric space element forms an angel β with a plane oriented perpendicular to the radial connection axis, which angel is from 40° to 60°. The surfaces of the geometric element can be flat, convex or concave.

It is clear from the previous knowledge that it is possible to control the characteristics in the desired direction by positioning of the lamellas in the block body. Because the surface of the pattern block is stressed in all directions of the contact surface during co-working with the road surface, it is necessary to select shape and configuration of the lamella regarding said state. It is the reason why the lamella having the shape of three-pointed star was chosen, which shape takes the present space disposition of the elements in account. In some cases it is possible to change the number of the star points, depending on the desired characteristics. The star-points orientation, arrangement, and density of the lamellas in the block is controlled by the graph of the accelerations obtained by the experimental measurements. Since the pattern block is the space object deforming in all directions, it is necessary to control mutual effects of the adjoining areas of the lamella's cutting also in vertical direction. It is the reason why the lamella is formed as a helix in the direction perpendicular to the surface area of the pattern block, which lamella consists of two vertical areas curved by alpha angle and connected by the area tangential connected to the vertical areas. Plan view of the lamella is curved depending on the depth of the lamella. The rotation axis crosses the centre of the lamella. The area of the curved surface can be supplemented with the additional space element increasing the effectiveness.

### Description of Drawings

Figure 1 illustrates the geometric presentation of the lamellar blade according to this invention.
Figure 2 is the front view of the lamella's blade and its section at the projection site.

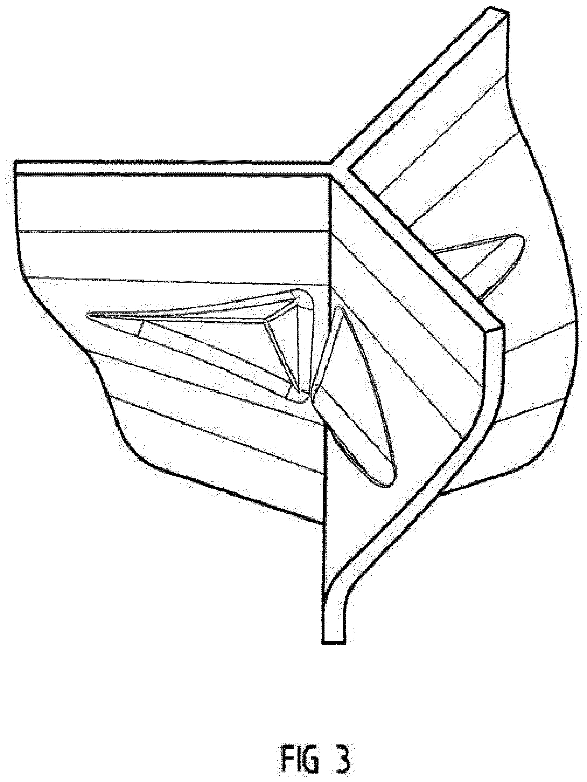

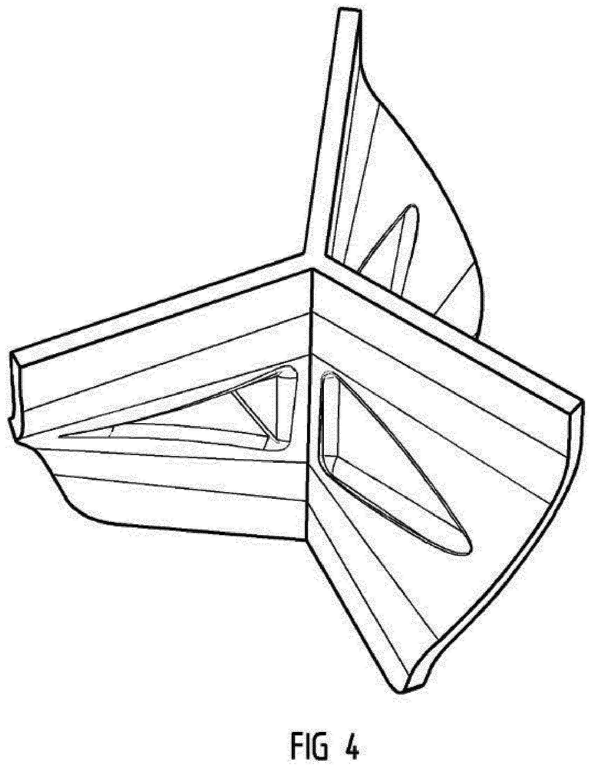

Figures 3 and 4 are the perspective views of the lamella according to the invention.
Figure 5 provides the view of the double lamella.

### Examples of the Invention Embodiments

To make the description of the lamella's body clearer it will be described only as a surface formed by neutral axis during the bending of the lamella. The radius and scarfs inevitable for the technology of thin-wall products manufacturing will not be considered. Thus the lamella's body is created by the evenly applied material layer in relation to the neutral surface in the direction of each surface side. The individual blades are assembled in the resulting lamella.

The lamella is formed by the moulding of the metal material. 3-dimensional moulding intended for positioning in the mould cavity is formed, with the assistance of which the cutting in the pattern block of the tread is created. The individual blades are assembled in the resulting lamella.

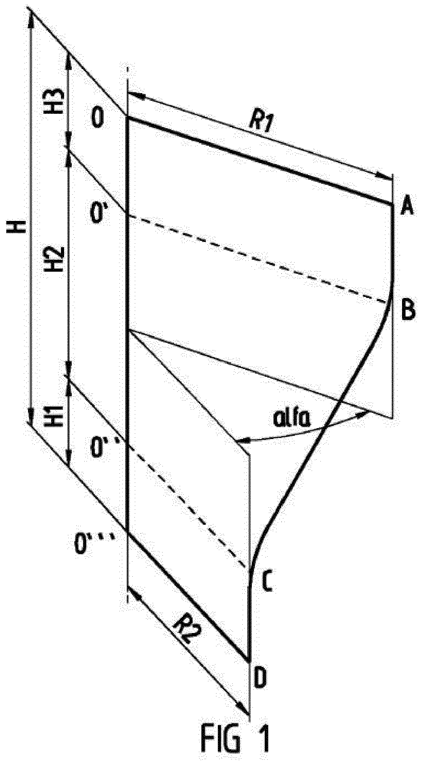

The lamella's blade, as illustrated on figure 1, is formed as the area consisting of the helical area **0'B C 0"** and two flat areas **0 A B 0', 0"C D 0"'**. The helical area is the function of **alpha** angle and height **H2. H2** interval can acquire the values from the interval of ¼ - 1/2 **H**, wherein **H** is the depth of the lamella defined from the outer tread surface. **H** interval is equal to the interval **0 0"'.** α angle acquires values from 20° to 40°, while the angle bigger than 45° negatively influences the rigidity of the tread; particularly the life span of the tread can be decreased. Their values are determined by the desired characteristics.

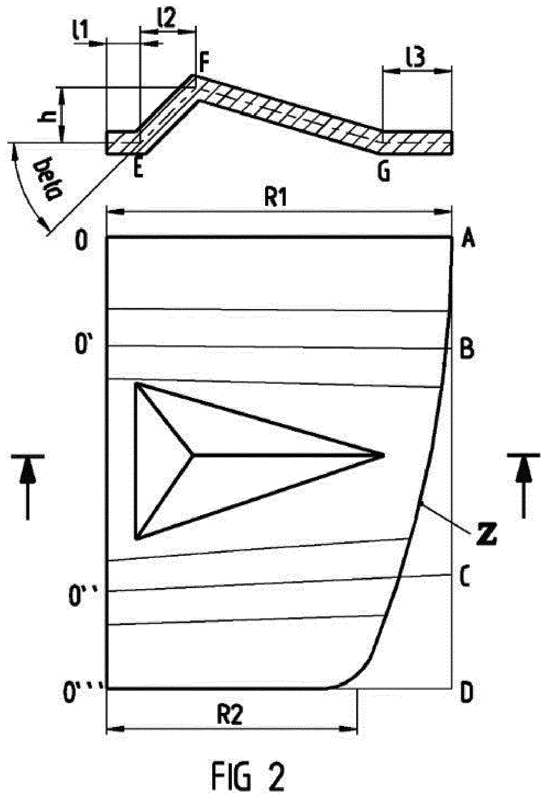

Lamella's blade has length R1 (interval **0 A**), which can be constant or changing as the function of increasing depth according to the desired characteristics, and in point **0"'** its length will be R2. The length of the blade of the lamella is limited by the edge of the helical area **Z**, which shape is defined experimentally. The helical area Z can be supplemented with the space element, in order to increase the rigidity of the pattern eliminating the mutual shift of the parallel helical areas, particularly in the case of using of the plane configuration having the angle approximating to maximal limit. The space element is positioned directly in the helical area and its dimensions are described on Figure 2. Distances 11 and 13 are distances from the borders of the projection of each side to the edge of the lamella. Distances 11 and 13 can be identical or different. β angle of the inner area is within the range from 40° to 60°. The projection area in the interval E F can be flat or convex, or concave.

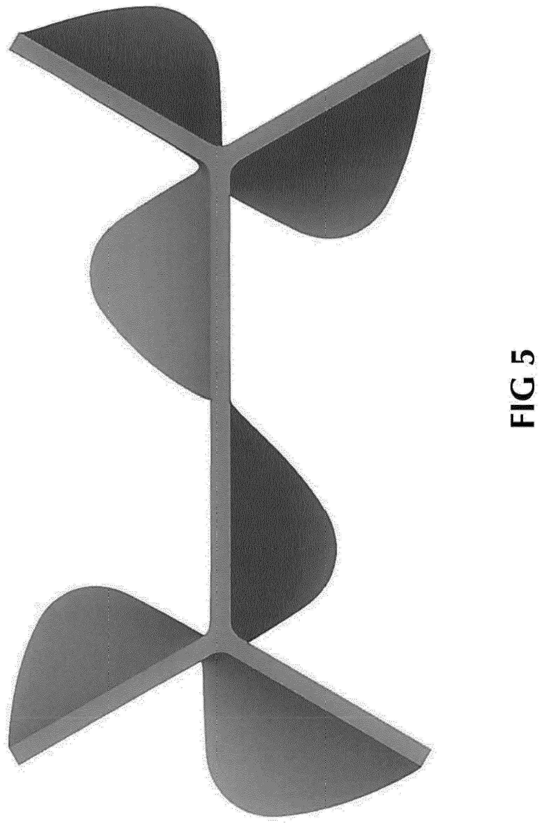

The resulting lamella is formed by folding and welding of the individual blades to the shape of 3- or 4-pointed star. The blades of the lamella can be assembled to bigger unit by the connection of two lamella's blades, as illustrated on figure 5.

## Claims

1. The tyre tread containing at least one row of the pattern blocks arranged in the circumferencial direction of the tread, wherein at least one of these blocks is provided with one or more three dimensionally shaped lamellar cuttings in the radial direction of the tyre, and this shaped lamellar cutting is defined by mutually fitting shaped surfaces formed by lamella during the vulcanisation, wherein the lamellar cutting is formed by the lamella consisting of at least three radially arranged blades connected in one axis in the radial direction of the tyre, **characterized in that,** the surface of each blade contains two flat surface areas with a helical surface area Z between them, wherein the flat surface areas form an angle α around their connection axis, and the total radial depth of the lamellar cutting is H.

2. The tyre tread according to claim 1, **characterized in that** the angel α = 20° to 45°.

3. The tyre tread according to claim 1, **characterized in that** each flat surface area of each blade forms at least ¼ of the total radial depth H, and the helical part of the cutting, formed by the individual lamella's blade, forms from 1/4 to 1/2 of the depth H.

4. The tyre tread according to claim 1, **characterized in that** the lamellar cutting is formed by a doubled lamella formed from two lamellas arranged in such a way that one blade is connected to or touches the blade of the other lamella.

5. The tyre tread according to claims 1 or 4, **characterized in that** helical part of at least one cutting of the lamella's blade is provided with a geometric space element formed by at least three walls and oriented perpendicular to the radial connection axis, in order to increase the rigidity of the pattern block.

6. The tyre tread according to claim 5, **characterized in that** at least one geometric space element forms anangle β with a plane oriented perpendicular to the radial connection axis, which angle β is in the range of 40° to 60°.

7. The tyre tread according to claim 5, **characterized in that** the wall surfaces are flat, convex, or concave.

8. The lamella suitable to be fixed in the inner part of a vulcanisation mould in order to form the lamellar cutting in the pattern block of the tyre tread according to any of claims 1 to 7, **characterized in that** it is formed as a helix having R1 diameter at its radially outer end and R2 diameter at its radially inner end, in directions perpendicular to the connection axis; and the lamella consists of at least three radially arranged regularly positioned blades connected in the radial connection axis; and each blade consists of two flat surface areas forming and angle α around the connection axis which are connected by a helical surface area Z between them which is tangentially attached to the flat surface areas; while in a view in the radial direction of the tyre the lamella is twisted depending on the radial depth of the lamella.

9. The lamella suitable to be fixed in the inner part of the vulcanisation mould according to claim 8, **characterized in that** the helical area of the lamella's blade is supplemented with a geometric space element, which has a plane of symmetry arranged perpendicular to the helical area of the lamella.

10. The lamella suitable to be fixed in the inner part of the vulcanisation mould according to claim 8, **characterized in that** R1 is larger than R2.

11. The lamella suitable to be fixed in the inner part of the vulcanisation mould according to claims 8 or 9, **characterized in that** it consists of two lamellas assembled in opposition to each other and connected by the ends of one blade of each lamella.

12. The lamella suitable to be fixed in the inner part of the vulcanisation mould according to at least the preceding claims 5 and 8, **characterized in that** at least one geometric space element forms anangle β with a plane oriented perpendicular to the radial connection axis, which angle β is in the range of 40° to 60°.

13. The lamella suitable to be fixed in the inner part of the vulcanisation mould according to claim 12, **characterized in that** the planes of the walls of the axially oriented geometric element are flat, convex or concave.

## Patentansprüche

1. Reifenlauffläche, zumindest eine Reihe von in umlaufender Richtung der Lauffläche angeordneten Profilblöcken enthaltend,
wobei zumindest einer dieser Blöcke mit einem oder mehreren dreidimensional geformten Lamelleneinschnitten in der radialen Richtung des Reifens versehen ist und dieser geformte Lamelleneinschnitt durch gegenseitiges Anbringen von geformten Oberflächen definiert ist, die während der Vulkanisierung durch Lamellen geformt werden, wobei der Lamelleneinschnitt durch die Lamelle geformt wird, die aus mindestens drei radial angeordneten Blättern besteht, die in einer Achse in der radialen Richtung des Reifens verbunden sind, **dadurch gekennzeichnet, dass** die Oberfläche jedes Blattes zwei flache Oberflächenbereiche mit einem spiralförmigen Oberflächenbereich Z zwischen ihnen enthält, wobei die flachen Oberflächenbereiche einen Winkel α um ihre Verbindungsachse bilden und wobei die radiale Gesamttiefe des Lamelleneinschnitts H ist.

2. Reifenlauffläche nach Anspruch 1, **dadurch gekennzeichnet, dass** der Winkel α = 20° bis 45°.

3. Reifenlauffläche nach Anspruch 1, **dadurch gekennzeichnet, dass** jeder flache Oberflächenbereich jedes Blattes mindestens ¼ der radialen Gesamttiefe H bildet und dass der spiralförmige Teil des Einschnitts, gebildet durch das Blatt der einzelnen Lamellen, von 1/4 bis 1/2 der Tiefe H bildet.

4. Reifenlauffläche nach Anspruch 1, **dadurch gekennzeichnet, dass** der Lamelleneinschnitt durch eine gedoppelte Lamelle gebildet wird, die aus zwei Lamellen gebildet wird, die in einer Weise angeordnet sind, dass ein Blatt mit dem Blatt der anderen Lamelle verbunden ist oder dieses berührt.

5. Reifenlauffläche nach Ansprüchen 1 oder 4, **dadurch gekennzeichnet, dass** der spiralförmige Teil von zumindest einem Einschnitt des Lamellenblatts mit einem geometrischen Raumelement versehen ist, das durch mindestens drei Wände gebildet wird und rechtwinklig zur radialen Verbindungsachse ausgerichtet ist, um die Steifigkeit des Profilblocks zu erhöhen.

6. Reifenlauffläche nach Anspruch 5, **dadurch gekennzeichnet, dass** zumindest ein geometrisches Raumelement einen Winkel β mit einer Ebene bildet, die rechtwinklig zur radialen Verbindungsachse ausgerichtet ist, wobei Winkel β im Bereich von 40° bis 60° liegt.

7. Reifenlauffläche nach Anspruch 5, **dadurch gekennzeichnet, dass** die Wandflächen flach, konvex oder konkav sind.

8. Lamelle, geeignet, um im inneren Teil einer Vulkanisierungsform befestigt zu werden, um nach einem der Ansprüche 1 bis 7 den Lamelleneinschnitt im Profilblock der Reifenlauffläche zu formen, **dadurch gekennzeichnet, dass** sie als eine Spirale mit Durchmesser R1 an ihrem radial äußeren Ende und Durchmesser R2 an ihrem radial inneren Ende geformt ist, in Richtungen rechtwinklig zur Verbindungsachse; und wobei die Lamelle aus mindestens drei radial angeordneten, regelmäßig positionierten Blättern besteht, die in der radialen Verbindungsachse verbunden sind; und wobei jedes Blatt aus zwei flachen Oberflächenbereichen besteht, die einen Winkel α um die Verbindungsachse bilden, die durch einen spiralförmigen Oberflächenbereich Z zwischen ihnen verbunden sind, der tangential an den flachen Oberflächenbereichen befestigt ist; während in einer Ansicht in der radialen Richtung des Reifens die Lamelle verdreht ist, abhängig von der radialen Tiefe der Lamelle.

9. Lamelle, geeignet, um im inneren Teil einer Vulkanisierungsform befestigt zu werden, nach Anspruch 8, **dadurch gekennzeichnet, dass** der spiralförmige Bereich des Lamellenblatts durch ein geometrisches Raumelement ergänzt wird, das eine Symmetrieebene aufweist, die rechtwinklig zum spiralförmigen Bereich der Lamelle angeordnet ist.

10. Lamelle, geeignet, um im inneren Teil einer Vulkanisierungsform befestigt zu werden, nach Anspruch 8, **dadurch gekennzeichnet, dass** R1 größer als R2 ist.

11. Lamelle, geeignet, um im inneren Teil einer Vulkanisierungsform befestigt zu werden, nach Ansprüchen 8 oder 9, **dadurch gekennzeichnet, dass** sie aus zwei Lamellen besteht, die zueinander entgegengesetzt zusammengebaut werden und über die Enden eines Blattes jeder Lamelle verbunden werden.

12. Lamelle, geeignet, um im inneren Teil einer Vulkanisierungsform befestigt zu werden, nach zumindest den vorherigen Ansprüchen 5 und 8, **dadurch gekennzeichnet, dass** zumindest ein geometrisches Raumelement einen Winkel β mit einer Ebene bildet, die rechtwinklig zur radialen Verbindungsachse ausgerichtet ist, wobei Winkel β im Bereich von 40° bis 60° liegt.

13. Lamelle, geeignet, um im inneren Teil einer Vulkanisierungsform befestigt zu werden, nach Anspruch 12, **dadurch gekennzeichnet, dass** die Ebenen der Wände des axial ausgerichteten geometrischen Elements flach, konvex oder konkav sind.

## Revendications

1. Bande de roulement de pneumatique contenant au moins une rangée de blocs de sculptures disposés dans la direction circonférentielle de la bande de roulement, dans laquelle au moins l'un de ces blocs est pourvu d'une ou de plusieurs découpes lamellaires façonnées tridimensionnelles dans la direction radiale du pneumatique, et cette découpe lamellaire façonnée est définie par des surfaces façonnées mutuellement ajustées formées par des lamelles pendant la vulcanisation, la découpe lamellaire étant formée par les lamelles constituées d'au moins trois lames disposées radialement reliées dans un axe dans la direction radiale du pneumatique,
**caractérisée en ce que** la surface de chaque lame contient deux surfaces planes entre lesquelles se trouve une surface hélicoïdale Z, les surfaces planes formant un angle α autour de leur axe de connexion, et la profondeur radiale totale de la découpe lamellaire étant H.

2. Bande de roulement de pneumatique selon la revendication 1, **caractérisée en ce que** l'angle α = 20° à 45°.

3. Bande de roulement de pneumatique selon la revendication 1, **caractérisée en ce que** chaque surface plane de chaque lame forme au moins 1/4 de la profondeur radiale totale H, et la partie hélicoïdale de la découpe, formée par la lame de lamelle individuelle, forme entre 1/4 et 1/2 de la profondeur H.

4. Bande de roulement de pneumatique selon la revendication 1, **caractérisée en ce que** la découpe lamellaire est formée par une double lamelle formée de deux lamelles disposées de telle manière qu'une lame est reliée à ou touche la lame de l'autre lamelle.

5. Bande de roulement de pneumatique selon la revendication 1 ou 4, **caractérisée en ce qu'**une partie hélicoïdale d'au moins une découpe de la lame de la lamelle est pourvue d'un élément de cavité géométrique formé par au moins trois parois et orienté perpendiculairement à l'axe de connexion radial, afin d'augmenter la rigidité du bloc de sculptures.

6. Bande de roulement de pneumatique selon la revendication 5, **caractérisée en ce qu'**au moins un élément de cavité géométrique forme un angle β avec un plan orienté perpendiculairement à l'axe de connexion radial, lequel angle β est compris entre 40° et 60°.

7. Bande de roulement de pneumatique selon la revendication 5, **caractérisée en ce que** les surfaces des parois sont planes, convexes ou concaves.

8. Lamelle adaptée pour être fixée dans la partie intérieure d'un moule de vulcanisation afin de former la découpe lamellaire dans le bloc de sculptures de la bande de roulement de pneumatique selon l'une quelconque des revendications 1 à 7, **caractérisée en ce qu'**elle est formée sous la forme d'une hélice ayant un diamètre R1 à son extrémité radialement extérieure et un diamètre R2 à son extrémité radialement intérieure, dans des directions perpendiculaires à l'axe de connexion ; et la lamelle se compose d'au moins trois lames disposées radialement, positionnées régulièrement et reliées dans l'axe de connexion radial ; et chaque lame se compose de deux surfaces planes formant un angle α autour de l'axe de connexion qui sont reliées entre elles par une surface hélicoïdale Z qui est tangentiellement attachée aux surfaces planes ; tandis que dans une vue dans la direction radiale du pneumatique, la lamelle est torsadée en fonction de la profondeur radiale de la lamelle.

9. Lamelle adaptée pour être fixée dans la partie intérieure du moule de vulcanisation selon la revendication 8, **caractérisée en ce que** la surface hélicoïdale de la lame de la lamelle est complétée par un élément de cavité géométrique qui présente un plan de symétrie disposé perpendiculairement à la surface hélicoïdale de la lamelle.

10. Lamelle adaptée pour être fixée dans la partie intérieure du moule de vulcanisation selon la revendication 8, **caractérisée en ce que** R1 est supérieur à R2.

11. Lamelle adaptée pour être fixée dans la partie intérieure du moule de vulcanisation selon la revendication 8 ou 9, **caractérisée en ce qu'**elle est constituée de deux lamelles assemblées en opposition l'une à l'autre et reliées par les extrémités d'une lame de chaque lamelle.

12. Lamelle adaptée pour être fixée dans la partie intérieure du moule de vulcanisation selon au moins les revendications 5 et 8 précédentes, **caractérisée en ce qu'**au moins un élément de cavité géométrique forme un angle β avec un plan orienté perpendiculairement à l'axe de connexion radial, lequel angle β est compris entre 40° et 60°.

13. Lamelle adaptée pour être fixée dans la partie intérieure du moule de vulcanisation selon la revendication 12, **caractérisée en ce que** les plans des parois de l'élément géométrique orienté axialement sont plats, convexes ou concaves.
